(19) **Europäisches Patentamt / European Patent Office / Office européen des brevets**

(11) **EP 1 116 701 B1**

(12) **EUROPEAN PATENT SPECIFICATION**

(45) Date of publication and mention
of the grant of the patent:
**09.11.2011 Bulletin 2011/45**

(51) Int Cl.:
***C03C 25/00*** (2006.01)    ***C03B 37/00*** (2006.01)
***G02B 6/00*** (2006.01)

(21) Application number: **99943454.1**

(22) Date of filing: **20.09.1999**

(86) International application number:
**PCT/JP1999/005157**

(87) International publication number:
**WO 2000/017122 (30.03.2000 Gazette 2000/13)**

(54) **METHOD FOR PRODUCING OPTICAL FIBER**

VERFAHREN ZUR HERSTELLUNG EINER OPTISCHEN FASER

PROCEDE PERMETTANT DE PRODUIRE UNE FIBRE OPTIQUE

(84) Designated Contracting States:
**DE FR GB**

(30) Priority: **24.09.1998 JP 26881798**

(43) Date of publication of application:
**18.07.2001 Bulletin 2001/29**

(73) Proprietor: **Sumitomo Electric Industries, Ltd.
Osaka-shi,
Osaka 541-0041 (JP)**

(72) Inventors:
• **NAGAYAMA, Katsuya,
Yokohama Works
Yokohama-shi,
Kanagawa 244-8588 (JP)**
• **YOSHIDA, Motohide,
Yokohama Works
Yokohama-shi,
Kanagawa 244-8588 (JP)**

• **KOIDA, Masao,
Yokohama Works
Yokohama-shi,
Kanagawa 244-8588 (JP)**

(74) Representative: **HOFFMANN EITLE
Patent- und Rechtsanwälte
Arabellastraße 4
81925 München (DE)**

(56) References cited:
EP-A- 0 729 919    EP-A- 0 795 521
EP-A1- 0 582 405    WO-A-98/46536
JP-A- 10 310 456

• PATENT ABSTRACTS OF JAPAN vol. 2000, no. 08, 6 October 2000 (2000-10-06) -& JP 2000 143277 A (FURUKAWA ELECTRIC CO LTD:THE), 23 May 2000 (2000-05-23)

**Description**

Technical Field

The present invention relates to a method of producing an optical fiber whose polarization mode dispersion is reduced.

Background Art

When a conventional method of producing an optical fiber is carried out, it is difficult to form a core of an optical fiber and a cladding formed along a periphery of the core in exactly circular and concentric shapes in cross section. Therefore, they usually have slightly elliptical, or slightly distorted circular, shapes. Consequently, the refractive index profile is not completely symmetrical in the cross-section of the optical fiber, causing variations in the group velocity among polarization modes in the cross-section of the optical fiber. This causes the problem that the polarization mode dispersion increases.

Such increase in polarization mode dispersion becomes an obstacle particularly when putting into practical use optical fiber cables which are formed as submarine cables or trunk line cables which are required to have large capacities and long-distance transmission capability. In order to overcome this problem, a method of producing an optical fiber has been proposed, for example, in Japanese Unexamined Patent Publication No. 9-243833. In this method, a bare fiber is drawn from an optical fiber preform and is coated with a coating material to form an optical fiber, and then it is subjected to a predetermined twist according to the guide of a guide roller whose rotating shaft swings periodically.

EP 0 582 405 A1 discloses a method for making an optical fiber. According to this document, applying a torque to the fiber such that a spin is impressed on the fiber can substantially reduce polarization mode dispersion. It is taught that the spin impressed on the fiber does not have a constant special frequency but has e.g. alternately clockwise and counterclockwise helicity.

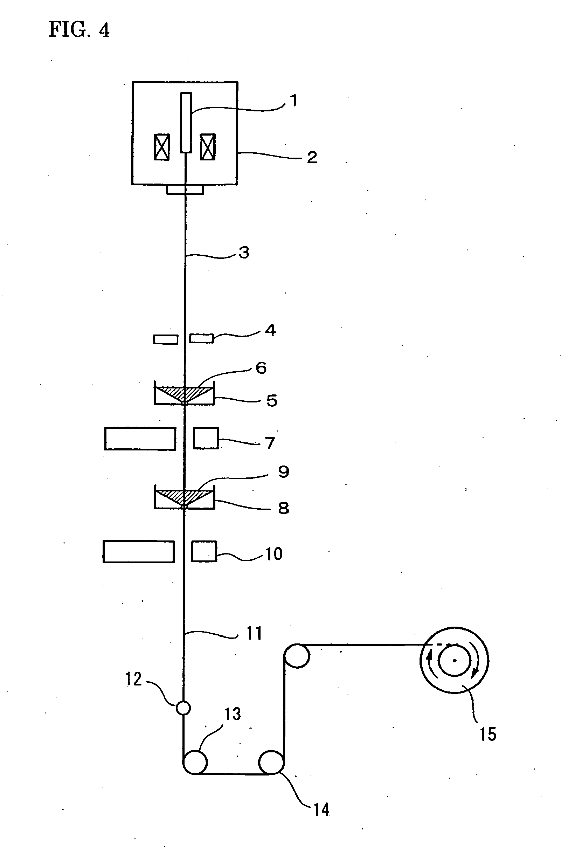

Figure 4 illustrates a process of producing an optical fiber. Reference numeral 1 denotes an optical fiber preform, reference numeral 2 a drawing furnace, reference numeral 3 a bare fiber, reference numeral 4 outer diameter monitoring equipment, reference numerals 5 and 8 coating dies, reference numerals 6 and 9 UV curable resins, reference numerals 7 and 10 UV lamps, reference numeral 11 an optical fiber, reference numeral 12 a deflection restricting guide roller assembly, reference numeral 13 a swinging guide roller, reference numeral 14 a fixed guide roller, and reference numeral 15 a take-up reel.

One end of the optical fiber preform 1 disposed in the drawing furnace 2 is softened by heating, and, from the one end, the bare fiber 3 is drawn downward in the vertical direction. The outer diameter of the bare fiber 3 is monitored by the outer diameter monitoring equipment 4, and the drawing speed, the feeding speed of the optical fiber preform, etc., are controlled by a controller (not shown) so that the outer diameter of the bare fiber falls within a predetermined range.

A first coating layer is formed on the periphery of the bare fiber 3 by applying a UV curable resin 6 with the coating die 5 and hardening the UV curable resin by irradiation of ultraviolet rays from the UV lamp 7. Then, a second coating layer is formed on the periphery of the first coating layer by applying a UV curable resin 9 with the coating die 8 and hardening the UV curable resin with irradiation of ultraviolet rays from the UV lamp 10. Thus, the optical fiber 11 is produced.

Thereafter, the optical fiber 11 moves along the deflection restricting guide roller assembly 12, the swinging guide roller 13, the fixed guide roller 14, etc., in order to be taken up by the take-up reel 15. Figures 5(A) and 5(B) are, respectively, a front view and a top view, which are used to illustrate the positional relationship between the optical fiber and each of the guide rollers. Figures 6(A), 6(B), and 6(C) are, respectively, a top view, a side view, and a front view, which are used to illustrate the positional relationship between the optical fiber and the deflection restricting guide roller assembly. Figure 7 is a top view used to illustrate a swinging state of the swinging guide roller.

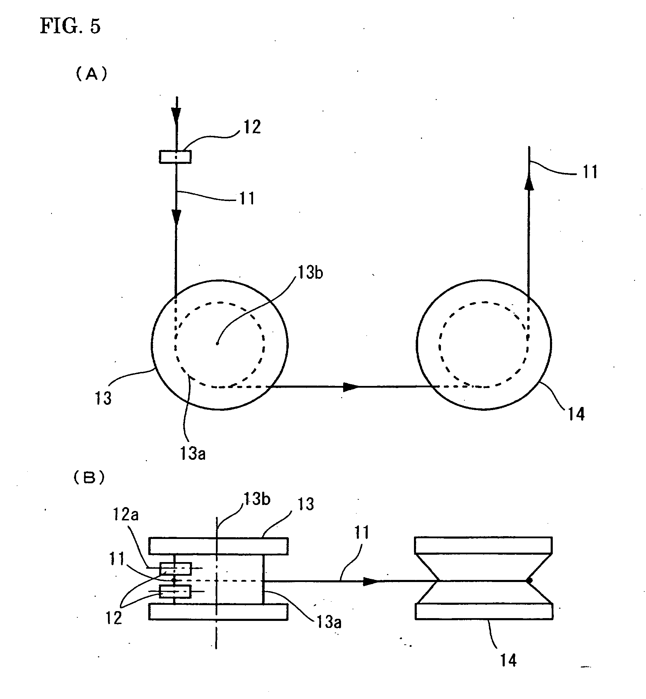

When the swinging guide roller 13 is at a standard location of swinging, as shown in Fig. 5, the optical fiber 11 which has moved downward vertically from above moves downward by passing through the deflection restricting guide roller assembly 12, bends at an angle of 90° along a roller surface 13a of the swinging guide roller 13, moves horizontally, bends again at an angle of 90° due to the fixed guide roller 14, and moves upward.

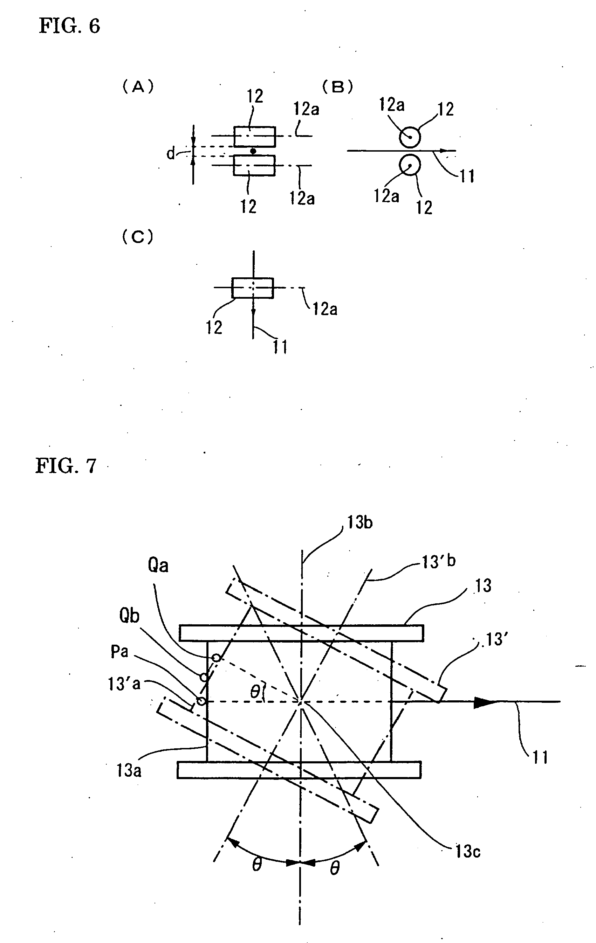

As shown in Fig. 6, the deflection restricting guide roller assembly 12 comprises a pair of columnar rollers which are disposed parallel to each other with a separation d of the order of 2 mm. Rotational axes 12a of the corresponding columnar rollers extend in a horizontal direction, and, when viewed from thereabove, as shown in Fig. 5(B), the direction of each rotational axis 12a of the columnar deflection restricting guide roller assembly 12 is perpendicular to the direction of a rotational axis 13b of the swinging guide roller 13. The optical fiber 11 moves downward, passing between the pair of deflection restricting guide rollers.

Next, the principle of twisting the optical fiber by the swinging guide roller is described. As shown in Fig. 7, the rotational axis 13b of the swinging guide roller 13 is always within a horizontal plane even while it is swinging, and swings by reciprocating with a constant periodicity within an angle range of $\pm\theta(°)$ from the standard location around vertical axis 13c which passes through the center of the swinging guide roller 13. Therefore, a swing amplitude D (mm) of the roller surface 13a with which the optical fiber comes into contact first is equal to the roller diameter (mm) $\times \pi \times \theta/360$.

The direction of movement of the optical fiber 11 is changed by 90° by the swinging guide roller 13, and, as shown in Fig. 7, according to the swinging of the roller surface 13a, the optical fiber tends to move along the roller surface 13a in a direction perpendicular to the direction of movement of the optical fiber. Here, the rotational motion of the optical fiber 11 around the optical fiber axis occurs.

The state of the rotational motion of the optical fiber at this time will be given in more detail. In Fig. 7, the swinging guide roller 13 shown with solid lines represents a swinging guide roller at the standard location. A swinging guide roller 13' shown with alternating long and short dash lines represents a swinging guide roller which is displaced to one side with a swing amplitude after swinging and rotating by a swing angle of $\theta(°)$. When the roller surface 13a is at the standard location, the location where the optical fiber 11 comes into contact with the roller surface 13a first is the point Pa.

When a roller surface 13'a is displaced with a swing amplitude as a result of swinging, the location where the optical fiber 11 comes into contact with the roller surface 13'a first is a point Qa. However, since a tension is exerted on the optical fiber 11, the optical fiber tends to move on the roller surface 13'a so as to pass a shortest distance.

Therefore, the location where the optical fiber 11 comes into contact with the roller surface 13'a first is displaced to a point Qb on the roller surface 13'a. At this time, since there is a frictional force acting on the optical fiber 11 and the roller surface 13'a, the optical fiber 11 moves along the roller surface 13'a while rotating around its axis, instead of sliding to move along the roller surface 13'a. In other words, rotational motion of the optical fiber 11 occurs.

When the optical fiber 11 rotates around the axis thereof at the location where the optical fiber 11 comes into contact with the swinging guide roller first, the rotational force is transmitted directly upward along the optical fiber 11, so that it is transmitted to the softened location of the lower portion of the optical fiber preform from where the bare fiber is drawn. Since the bare fiber which has been drawn from the softened location of the lower portion of the optical fiber preform is still soft, the rotational force which has been transmitted by the optical fiber acts directly on the glass in the bare fiber, causing twisting of the bare fiber to occur. The bare fiber which has been spun is subjected to coating, whereby the optical fiber is formed.

Thus, the optical fiber primarily performs a role to transmit to the bare fiber drawing portion the rotational force which is produced as a result of swinging.

What has been discussed above is the principle of causing the optical fiber to be spun by the swinging guide roller.

Since the roller surface swings forward and backward from the standard location, the direction of the rotational motion of the optical fiber changes with a constant periodicity. Accordingly, since the direction of rotation changes with a constant periodicity, the twisting direction of the optical fiber is also reversed in the lengthwise direction with a constant periodicity.

In order to reduce the polarization mode dispersion of the optical fiber by twisting it, it is necessary to make the twisting equal to or greater than a certain amount. A twisting of at least once per m of the longitudinal length of the optical fiber is required. If the drawing speed is the same, the number of swings required for providing the optical fiber with the aforementioned desired twisting differs depending on the outer diameter of the bare fiber. The larger the outer diameter, the fewer number of swings required, whereas, the smaller the outer diameter, the greater number of swings required. When the drawing speed of the optical fiber is small, such as equal to or less than 200 m/min, the number of swings of the swinging guide roller per hour need not be very large: desired twisting can be afforded to the optical fiber when the number of swings is in the order of 20 ~ 150 reciprocating motions/min.

However, when the drawing speed becomes a large value such as 250 m/min or greater, in order to produce the same amount of twisting per a certain length of the optical fiber, it is necessary to increase the number of swings per minute. However, when the number of swings per minute becomes greater than the conventional number of swings per minute, the outer diameter of the bare fiber and the outer diameter of the optical fiber vary in the longitudinal direction, so that good quality products with little variation in the outer diameters cannot be produced.

In addition, when the number of swings per minute becomes greater than the conventional number of swings per minute, even if a deflection restricting guide roller assembly is provided, deflection of the optical fiber disposed near the deflection restricting guide roller assembly occurs, giving rise to problems resulting from the deflection. More specifically, when, for example, a bubble sensor for detecting bubbles in the coatings of the optical fiber is set, a large deflection causes the value measured by the bubble sensor or the like to deviate greatly from the true value, so that errors are made occasionally in distinguishing good quality products from inferior quality products.

Disclosure of Invention

Accordingly, it is an object of the present invention to provide a method of producing an optical fiber which makes it possible to restrict variations in the outer diameter of a bare fiber and the outer diameter of the optical fiber in the longitudinal direction while reducing the polarization mode dispersion as a result of subjecting the optical fiber to optimal twisting even when the drawing speed becomes a large value such as 250 m/min or greater. It is another object to provide a method of manufacturing an optical fiber which can reduce deflection in the linear movement of the optical fiber and thereby enhance the precision of the judgment by a bubble sensor and the like as to the quality of a product.

In a first embodiment of the present invention, there is provided a method of producing an optical fiber in which an optical fiber preform is softened by heating in order to draw a bare fiber downward, the bare fiber is subjected to coating, and, while the bare fiber is spun around an axis thereof by a swinging guide roller which swings periodically, the optical fiber is produced, wherein a drawing speed is made equal to or greater than 250 m/min, and a swing amplitude of the swinging guide roller with which the optical fiber which is formed by coating the bare fiber comes into contact first is made equal to or less than ±7 mm but equal to or greater than ±0.5 mm in a direction perpendicular to a vertical axis in order to twist the optical fiber. Therefore, by setting the swing amplitude within the aforementioned range, even if the drawing speed is set at a large value equal to or greater than 250 m/min, and the number of swings is made large to properly twist the optical fiber, variations in the outer diameter of the bare fiber and the outer diameter of the optical fiber can be restricted to values equal to or less than a tolerance value.

In a second embodiment of the present invention, a deflection restricting guide roller is disposed between coating means for forming the coating and the swinging guide roller, and a fixed guide roller is disposed behind the swinging guide roller, and wherein, when the swing amplitude of the swinging guide roller is ±D (mm), the distance between the deflection restricting guide roller assembly and the swinging guide roller where the optical fiber does not contact the rollers on both sides thereof is La (mm), the distance between the swinging guide roller and the fixed guide roller where the optical fiber does not contact the rollers on both sides thereof is Lb (mm), and the smaller one of the distances La and Lb is L (mm), the relationship D/L > 0.005 is satisfied. Under this condition, the optical fiber is subjected to the desired twisting. Therefore, even if the swing amplitude becomes small, the optical fiber is sufficiently spun, making it possible to produce an optical fiber whose polarization mode dispersion is reduced.

Brief Description of the Drawings

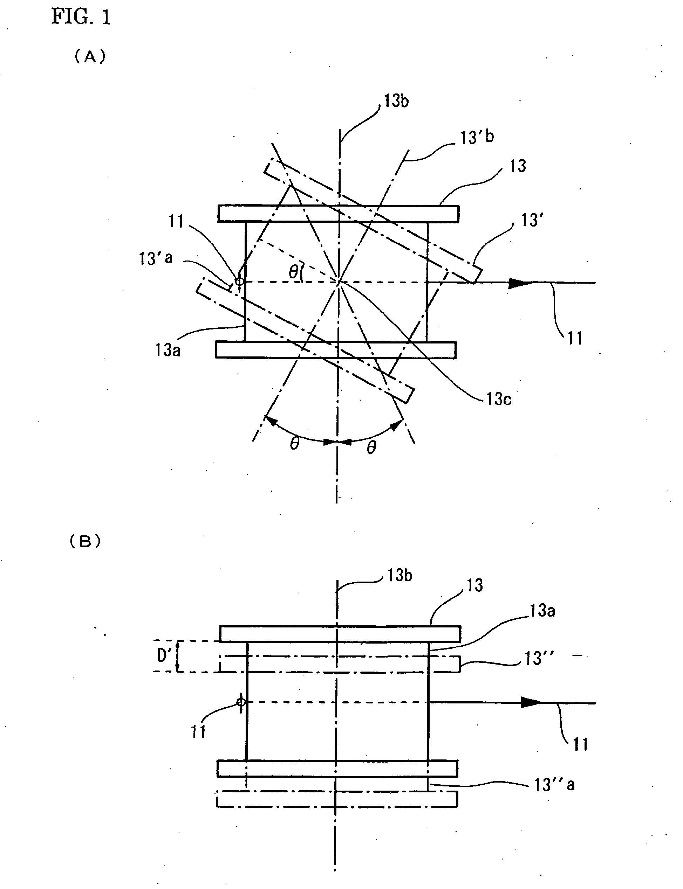

Figures 1(A) and 1(B) are used to illustrate the swinging of a swinging guide roller used in a first embodiment of a method of producing an optical fiber in accordance with the present invention, and are top views of the swinging guide roller.

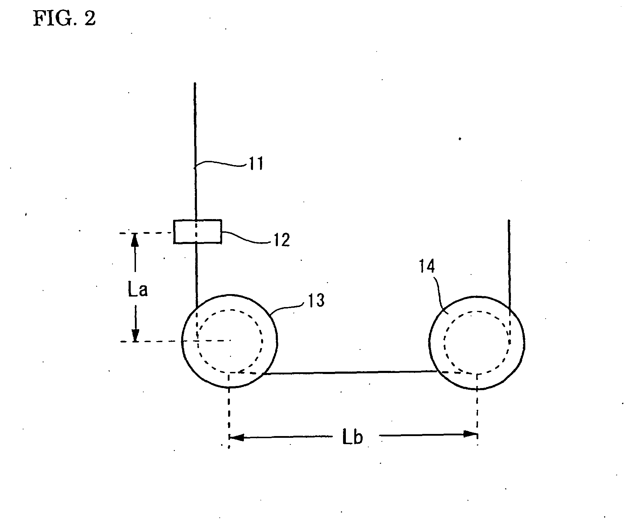

Figure 2 is used to illustrate the relationship between a swinging guide roller and rollers in front of and behind it, which are used in a second embodiment of the present invention, and is a front view of the vicinity of the swinging guide roller.

Figure 4 illustrates a process of producing the optical fiber.

Figures 5(A) and 5(B) are, respectively, a front view and a top view, which are used to illustrate the positional relationship between the optical fiber and each guide roller.

Figures 6(A), 6(B), and 6(C) are a top view, a side view, and a front view showing the positional relationship between the optical fiber and the deflection restricting guide roller assembly, respectively.

Figure 7 is a top view used to illustrate the swinging state of the swinging guide roller.

Best Mode for Carrying Out the Invention

Hereunder, a description of the present invention will be given with reference to the relevant drawings.

Figures 1(A) and 1(B) are used to illustrate the swinging of a swinging guide roller used in a first embodiment of a method of producing an optical fiber, and are top views of the swinging guide roller. In Figs. 1(A) and 1(B), a swinging guide roller 13 shown with solid lines represents a swinging guide roller at a standard location of swinging, whereas swinging guide rollers 13' and 13" shown with alternating long and short dash lines represent swinging rollers which are displaced by maximum amplitudes, with the displacements being shown only to one side of the standard location. Actually, the swinging guide roller similarly can swing to the opposite side of the standard location.

In Fig. 1(A), rotational axes 13b and 13'b of the swinging guide rollers are always positioned in a horizontal plane even while they are swinging, and the rotational axis 13b is rotated around a vertical axis 13c by a swing angle of $\theta(°)$ so that it reaches the location of the rotational axis 13'b. Here, a roller surface 13a of the swinging guide roller 13 is swung by an amount equal to D (mm) = roller diameter (mm) $\times \pi \times \theta/360$, and reaches the location of a roller surface 13'a. In the present invention, the swing amplitude D is set within ±7 mm but equal to or greater than ±0.5 mm.

By swinging the roller surface 13a of the swinging guide roller 13 by a swing amplitude of ±D (mm), an optical fiber 11 reciprocates by moving along the roller surface 13a. The rotational force of the optical fiber 11 is transmitted to a softened portion of the bare fiber which is drawn out, and causes the drawn bare fiber itself to be spun in the longitudinal direction. By the reciprocating motion resulting from the swinging, the direction in which the optical fiber 11 moves along the roller surface 13a reverses, so that the twisting direction of the optical fiber also reverses in the longitudinal direction in accordance with the swinging period.

Next, the details regarding the determination that it is preferable to set the amplitude D within the aforementioned range will be given. In order to subject the optical fiber to twisting by an amount equal to or greater than a certain value per a certain length of the optical fiber, when the drawing speed becomes large, it is necessary to increase the number of swings of the swinging guide roller per hour. However, it has been found that, when the number of swings is only increased, the outer diameter of the bare fiber and the outer diameter of the coating of the optical fiber vary. Accordingly, experiments were repeated to determine the conditions which do not cause variations in the outer diameter of the bare fiber and the outer diameter of the coating of the optical fiber. The following results were obtained from the experiments.

Swinging guide rollers having various diameters given in Table 1 were used. These swinging guide rollers were swung in the manner shown in Fig. 1(A), with the number of swings per minute being 200 reciprocating motions per minute and the swing angles being as shown in Table 1. The drawing speed was 400 m/min, and the drawing tension was 90 ~ 100 g. Accordingly, the outside diameters of bare fibers and outside diameters of optical fibers were as shown in Table 1. The swing amplitudes were obtained using the following formula:

$$\text{swing amplitude (mm)} = \text{roller diameter (mm)} \times \pi \times (\text{swing angle } (°)/360$$

TABLE 1

| Roller diameter of swinging guide roller (mm) | 150 | 50 | 150 | 50 |
|---|---|---|---|---|
| Swing angle (°) | $\pm 15$ | $\pm 15$ | $\pm 5$ | $\pm 5$ |
| Swing Amplitude (mm) | $\pm 20$ | $\pm 6.5$ | $\pm 6.5$ | $\pm 2.2$ |
| Outer diameter of bare fiber ($\mu$m) | $125\pm 0.4$ | $125\pm 0.1$ | $125\pm 0.1$ | $\leqq 125\pm 0.1$ |
| Outer diameter of optical fiber ($\mu$m) | $240\pm 10$ | $240\pm 2$ | $240\pm 2$ | $\leqq 240\pm 1$ |

According to the results shown in Table 1, it can be seen that even if the number of swings is set at a large number of swings of 200 times/min, variations in the outer diameters of the bare fibers and the outer diameters of the optical fibers can be made small by making the corresponding swing amplitudes of the corresponding guide rollers small. The swing amplitudes can be made small by reducing the swing angles or by reducing the roller diameters. Regardless of which method is used, if the swing amplitudes are made equal to or less than $\pm 7$ mm, optical fibers which can tentatively be used for practical purposes are obtained. It is more preferable to make the swing amplitudes equal to or less than $\pm 3$ mm because the variations in the outer diameters can be made even smaller. When the swing amplitudes are made too small, it becomes difficult to subject the optical fibers to a predetermined twisting, so that the swing amplitudes are preferably made equal to or greater than $\pm 0.5$ mm. In the experiments, in order to twist the optical fibers having outer diameters of 240 $\mu$m, the number of swings was 200 reciprocating motions per minute. However, for other numbers of swings (such as 100 - 300 reciprocating motions per minute), it is possible to expect reductions in the variations in the outer diameters by limiting the swing amplitudes to within the aforementioned ranges. For optical fibers having other outer diameters, it is possible to expect similar results and advantages by limiting the swing amplitudes to within the aforementioned ranges.

In Fig. 1(A), the rotational axis 13b of the swinging guide roller 13 swings in a reciprocative rotational manner around the vertical axis 13c, and the swing amplitude of $\pm$D (mm) is produced at the roller surface in a direction which is parallel to the surface by setting the swing angle at $\pm\theta$ (°). However, it can be swung in the manner shown in Fig. 1(B).

In Fig. 1(B), the rotational axis 13b of the swinging guide roller 13 is reciprocated in the direction of the rotational axis 13b instead of being rotated around the vertical axis 13c. The swinging guide roller 13" is displaced by D' to one side from the standard location of the swinging guide roller 13. The swing amplitude in this case is $\pm$D'.

Figure 2 illustrates the relationship between a swinging guide roller and rollers in front of and behind the swinging guide roller, which are used in a second embodiment, and is a frontal view of the vicinity of the swinging guide roller. When an optical fiber is in contact with a pair of deflection restricting guide rollers, the distance between a deflection restricting guide roller assembly 12 and a swinging guide roller 13 where an optical fiber 11 does not contact the rollers on both sides thereof is La, the distance between the swinging guide roller 13 and a fixed roller 14 where the optical fiber 11 does not contact the rollers on both sides thereof is Lb, the smaller one of the diameters La and Lb is L, and the swing amplitude of the swing guide roller is $\pm$D (mm), it is preferable that the relationship D/L > 0.005 be satisfied.

The details regarding how we found the second embodiment will be given. Consideration was given to whether or not the optical fiber could be subjected to sufficient twisting even when the drawing speed was set at a large value equal to or greater than 250 m/min, and the swing amplitude was made small. As a result of the consideration, as shown in Tables 2 and 3, it was found that the ratio between the swing amplitude of the swing guide roller and the distance between the deflection restricting guide roller assembly and the swinging guide roller where an optical fiber did not contact the rollers on both sides thereof was strongly related to the twisting of the optical fiber. The number of swings was 200 reciprocating motions per minute, the drawing speed was 400 m/min, the drawing tension was 90 - 100 g, the outer diameter (set value) of a bare fiber was 125 $\mu$m, and the outer diameter (set values) of the optical fiber was 240 $\mu$m.

TABLE 2

| In the case where,<br>Diameter of the swinging guide roller: 50 mm<br>Swing angle θ: $\pm$ 2°<br>Swing amplitude D: $\pm$0.87 mm | | | |
|---|---|---|---|
| Distance La (mm) | 500 | 200 | 80 |
| Swing amplitude D/Distance La | 0.0017 | 0.0044 | 0.011 |
| Number of twistings of optical fiber (Number of Twistings/m) | 0.3 | 1.2 0.3 | 3.5 |

where La, which is the distance between the deflection restricting guide roller assembly and the swinging guide roller where the optical fiber does not contact the rollers on both sides thereof is as shown above, and Lb, which is the distance between the swinging guide roller and the fixed guide roller where the optical fiber does not contact the rollers on both sides thereof is equal to 500 mm.

TABLE 3

| In the case where,<br>Diameter of the swinging guide roller: 50 mm<br>Swing angle θ: $\pm$ 10°<br>Swing amplitude D: $\pm$4.4 mm | | | |
|---|---|---|---|
| Distance La (mm) | 500 | 200 | 80 |
| Swing amplitude D/Distance La | 0.0088 | 0.022 | 0.055 |
| Number of twistings of optical fiber (Number of Twistings/m) | 1.5 | 4 | 15 |

where La, which is the distance between the deflection restricting guide roller assembly and the swinging guide roller where the optical fiber does not contact the rollers on both sides thereof is as shown above, and Lb, which is the distance between the swinging guide roller and the fixed guide roller where the optical fiber does not contact the rollers on both sides thereof is equal to 500 mm.

According to the results shown in Tables 2 and 3, it can be understood that when the swing amplitude D/ distance La value, that is, the ratio between the swing amplitude D and the distance La between the deflection restricting guide roller assembly and the swinging guide roller where the optical fiber does not contact the rollers on both sides thereof, is increased, the number of twistings of the optical fiber becomes large. In order to make the number of twistings of the optical fiber equal to or greater than one twisting/m, the swing amplitude D/distance La value should be made approximately equal to or greater than 0.005. In other words, in the case where the swing amplitude is the same, if the axial distance between the deflection restricting guide roller assembly and the swinging guide roller is made small in order to reduce the distance where the optical fiber does not contact the rollers on both sides thereof, the number of twistings of the optical fiber which is equal to or greater than the desired number of twistings is obtained.

In the case where the optical fiber is in contact with the pair of deflection restricting guide rollers, when the distance between the deflection restricting guide roller assembly and the swinging guide roller where the optical fiber does not contact the rollers on both sides thereof is La, the distance between the swinging guide roller and the fixed guide roller where the optical fiber does not contact the rollers on both sides thereof is Lb, the swing amplitude of the swinging guide roller is D, and sliding of the optical fibers on the roller surface is not taken into account, the rotational motion of the optical fiber around the axis thereof which occurs as a result of the rotational motion of the optical fiber at the roller surface of the swinging guide roller is proportional to D/La + D/Lb.

Here, when the smaller one of the diameters La and Lb is L, $2 \times D/L > D/La + D/Lb > D/L$, so that, in general, the rotation around the axis of the optical fiber is approximately proportional to D/L. Therefore, the rotation of the optical fiber around the axis thereof is virtually determined by the distance between the swinging guide roller and either the deflection restricting guide roller or the fixed guide roller, whichever is closer to the swinging guide roller. Considering the results shown in Tables 2 and 3 and this fact, in order to make the variation in the outer diameter small even if the drawing speed is a large value which is equal to or greater than 250 m/min, it is believed that, by making the D/L equal to or greater than 0.005, the twisting of the optical fiber can be made equal to or greater than a desired value of one twisting/m even if the swing amplitude is small.

## Claims

1. A method of producing an optical fiber (11) in which an optical fiber preform (1) is softened by heating in order to draw a bare fiber (3) downward, the bare fiber is subjected to coating, and, while the bare fiber is spun around an axis thereof by a swinging guide roller (13) which swings periodically, the optical fiber is produced, wherein a drawing speed is made equal to or greater than 250 m/min, and
**characterized in that** a swing amplitude of a roller surface which is where the optical fiber which is formed by coating the bare fiber comes into contact with the swinging guide roller first is made equal to or less than $\pm 7$ mm but equal to or greater than $\pm 0.5$ mm in a direction perpendicular to a vertical axis in order to spin the optical fiber.

2. A method of producing an optical fiber according to Claim 1, wherein a deflection restricting guide roller (12) is disposed between coating means for forming the coating and the swinging guide roller, and a fixed guide roller (14) is disposed at a side of the swinging guide roller towards which the optical fiber moves, and wherein, when the swing amplitude of the swinging guide roller is $\pm D$ (mm), the distance between the deflection restricting guide roller and the swinging guide roller where the optical fiber does not contact the rollers on both sides thereof is La (mm), the distance between the swinging guide roller and the fixed guide roller where the optical fiber does not contact the rollers on both sides thereof is Lb (mm), and the smaller one of the distances La and Lb is L (mm), the relationship D/L > 0.005 is satisfied.

## Patentansprüche

1. Verfahren zum Herstellen einer Lichtleitfaser (11), bei dem eine Lichtleitfaservorform (1) durch Erwärmen erweicht wird, um eine freiliegende Faser (3) nach unten zu ziehen, die freiliegende Faser einer Beschichtung unterzogen wird und, während die freiliegende Faser um eine Achse derselben durch eine schwingende Führungsrolle (13), die periodisch schwingt, gedreht wird, die Lichtleitfaser hergestellt wird, wobei eine Ziehgeschwindigkeit so eingestellt wird, dass sie gleich groß wie oder größer als 250 m/min ist, und
**dadurch gekennzeichnet, dass** eine Schwingamplitude einer Rollenoberfläche, an der die Lichtleitfaser, die durch Beschichten der freiliegenden Faser ausgebildet wird, zuerst mit der schwingenden Führungsrolle in Kontakt kommt, so eingestellt wird, dass sie gleich groß wie oder kleiner als $\pm 7$ mm aber gleich groß wie oder größer als $\pm 0,5$ mm in einer Richtung senkrecht zu einer vertikalen Achse ist, um die Lichtleitfaser zu drehen.

2. Verfahren zum Herstellen einer Lichtleitfaser nach Anspruch 1, bei dem eine eine Auslenkung beschränkende Führungsrolle (12) zwischen einem Beschichtungsmittel zum Ausbilden der Beschichtung und der schwingenden Führungsrolle angeordnet ist und eine feste Führungsrolle (14) an einer Seite der schwingenden Führungsrolle angeordnet ist, zu der sich die Lichtleitfaser hinbewegt, und bei dem, wenn die Schwingamplitude der schwingenden Führungsrolle $\pm D$ (mm) ist, der Abstand zwischen der eine Auslenkung beschränkenden Führungsrolle und der schwingenden Führungsrolle dort, wo die Lichtleitfaser die Rollen an beiden Seiten derselben nicht berührt, La (mm) ist, der Abstand zwischen der schwingenden Führungsrolle und der festen Führungsrolle dort, wo die Lichtleitfaser die Rollen an beiden Seiten derselben nicht berührt, Lb (mm) ist und der kleinere der Abstände La und Lb L (mm) ist, die Beziehung D/L > 0,005 erfüllt ist.

## Revendications

1. Procédé pour produire une fibre optique (11) dans lequel une préforme de fibre optique (1) est ramollie par chauffage afin d'étirer une fibre dénudée (3) vers le bas, la fibre dénudée est soumise au revêtement et alors que la fibre dénudée est enroulée autour de son axe par un rouleau de guidage oscillant (13) qui oscille périodiquement, la fibre optique est produite, dans lequel une vitesse d'étirement est égale ou supérieure à 250 m/min, et **caractérisé en ce qu'**une amplitude d'oscillation de la surface de rouleau qui a lieu lorsque la fibre optique qui est formée en recouvrant la fibre dénudée vient en contact avec le rouleau de guidage oscillant, est égale ou inférieure à ± 7 mm mais égale ou supérieure à ± 0,5 mm dans une direction perpendiculaire à un axe vertical afin d'enrouler la fibre optique.

2.  Procédé pour produire une fibre optique selon la revendication 1, dans lequel un rouleau de guidage de limitation de déviation (12) est disposé entre les moyens de revêtement pour former le revêtement et le rouleau de guidage oscillant, et un rouleau de guidage fixe (14) est disposé au niveau d'un côté du rouleau de guidage oscillant vers lequel la fibre optique se déplace, et dans lequel, lorsque l'amplitude d'oscillation du rouleau de guidage oscillant est ± D (mm), la distance entre le rouleau de guidage de limitation de déviation et le rouleau de guidage oscillant où la fibre optique n'est pas en contact avec les rouleaux sur ses côtés est La (mm), la distance entre le rouleau de guidage oscillant et le rouleau de guidage fixe où la fibre optique n'est pas en contact avec les rouleaux sur ses deux côtés est Lb (mm), et la plus petite des distances La et Lb est L (mm), la relation D/L > 0,005 est satisfaite.

FIG. 1

(A)

(B)

FIG. 2

FIG. 4

FIG. 5

(A)

(B)

FIG. 6

(A)

(B)

(C)

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9243833 A

- EP 0582405 A1